(19) Europäisches Patentamt
European Patent Office
Office européen des brevets

(11) **EP 2 309 761 A1**

(12) **EUROPEAN PATENT APPLICATION**

(43) Date of publication:
**13.04.2011 Bulletin 2011/15**

(51) Int Cl.:
***H04N 9/67*** (2006.01)

(21) Application number: **09171288.5**

(22) Date of filing: **24.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **NXP B.V.**
**5656 AG Eindhoven (NL)**

(72) Inventors:
• **Belik, Oleg**
**5656, AE Eindhoven (NL)**

• **Xie, Yingrong**
**5656, AE Eindhoven (NL)**

(74) Representative: **Krott, Michel**
**NXP B.V.**
**Intellectual Property & Licensing Department**
**High Tech Campus 32**
**5656 AE  Eindhoven (NL)**

(54) **A method for processing video data for a liquid crystal display**

(57)     A method for a method for processing video data, the video data being adapted for being displayed on a locally dimmable liquid crystal display is provided. The method comprises color enhancing the video data (211). The method further comprises determining dimming factors corresponding to primary color components of the video data corresponding to a pixel of the locally dimmable liquid crystal display based on the color enhanced video data (213). The method furthermore comprises determining a color correction of the color enhanced video data (213) corresponding to the pixel of the locally dimmable liquid crystal display based on the dimming factors. The method also comprises processing the video data based on the determined color correction.

Fig. 2

**Description**

FIELD OF THE INVENTION

The invention relates to a method for processing video data, the video data being adapted for being displayed on a locally dimmable liquid crystal display.

The invention further relates to a system for processing video data, the video data being adapted for being displayed on a locally dimmable liquid crystal display.

BACKGROUND OF THE INVENTION

Color enhancement blocks play an important role in a television (TV) processing chain. Usually, a TV processing chain comprises several color enhancement blocks, for instance blocks for green enhancement, skin tone correction, a gamut mapping to a display gamut (a gamut mapping block), etc. Some of the color enhancement blocks can be display independent, while others, like the gamut mapping block require specification of a target gamut. If a backlight intensity and a backlight color are fixed then a liquid crystal display (LCD) has a fixed gamut, which does not change in time. In other words, the LCD has a static gamut. With a static display gamut the color processing chain can be optimally tuned for the best image quality reproduction.

Recently, locally dimmable per color LCDs were introduced. In such locally dimmable per color LCDs, presently available liquid crystal (LC) panels and dimmable red, green and blue light emitting diodes (RGB LED) are combined, the LEDs providing for the backlight. Such a combination results into so-called dynamically changeable display color gamut. With such a dynamically changeable display color gamut it may be difficult maintain the color perception quality in the time domain and, for local dimming applications, also in spatial domain, because the corresponding dynamic gamut changes are strongly dependent on the video content to be presented.

None of the presently available methods for minimizing an impact on color rendering when gamut is dynamically changed can guarantee the best color performance.

Therefore, specific color processing steps may be required, in order to maintain the color perception quality in the time and/or the spatial domain for a locally dimmable LCD.

OBJECT AND SUMMARY OF THE INVENTION

It is an object of the invention to provide for processing video data, which processing efficiently improves color reproduction on a locally dimmable LCD.

In order to achieve the object defined above, a method and a system for processing video data are provided.

According to an exemplary embodiment of the invention, it is provided a method for processing video data adapted for being displayed on a locally dimmable liquid crystal display. The method comprises color enhancing the video data. The method further comprises determining dimming factors corresponding to primary color components of the video data corresponding to a pixel of the locally dimmable liquid crystal display based on the color enhanced video data. The method furthermore comprises determining a color correction of the color enhanced video data corresponding to the pixel of the locally dimmable liquid crystal display based on the dimming factors. The method also comprises processing the video data based on the determined color correction.

According to another exemplary embodiment of the invention, it is provided a system for processing video data adapted for being displayed on a locally dimmable liquid crystal display. The system comprises a static color enhancement block for color enhancing of video data. The system further comprises a dimming block for determining dimming factors corresponding to primary color components of the video data corresponding to a pixel of the locally dimmable liquid crystal display based on the color enhanced video data. The system furthermore comprises a dynamic color enhancement block for determining a color correction of the color enhanced video data corresponding to the pixel of the locally dimmable liquid crystal display based on the dimming factors. The system also comprises a gain block for processing the video data based on the determined color correction.

According to another exemplary embodiment of the invention, it is provided a program element for processing video data adapted for being displayed on a locally dimmable liquid crystal display. The program element, when being executed by a data processor, is adapted for controlling the method for processing video data, the video data being adapted for being displayed on a locally dimmable liquid crystal display.

The term "color enhancing" may particularly denote any color processing preformed in order to improve a color reproduction. Examples of color enhancing may comprise, for instance a green enhancement and similarly an enhancement of one and/or more primary colors, skin tone correction, gamut mapping to a display gamut, etc. To enhance one or more primary colors a curve or curves, respectively may be applied to corresponding primary color channels. For instance, an s-curve or s-curves may be applied to the one or more primary color channel, respectively. Further, a gamma of an image may be changed by changing brightness, without manipulating a white and/or a black level. Furthermore, a saturation may be increased just before a point of clipping in order to avoid a color ending up out gamut (i.e., color clipping) when the saturation is too high. A color processing step resulting in an increased saturation may be referred to as a "saturation boosting". A color processing step resulting in a decreased saturation may be referred to as a "desaturation".

The term "clipping" may particularly refer to the saturation and/or luminance of the color falling outside the interval defined by minimum and maximum saturations and/or luminance, which minimum and maximum values can be represented by a device, for instance an LCD, in particular by a pixel of the LCD. In this sense the term "clipping" may also denote a color processing step, resulting in the saturation and/or luminance pulling back inside the range between minimum and maximum saturation and/or luminance which can be represented by the device, particularly by the pixel of the device. In general, a clipped area of an image can typically appear as a uniform color area with minimum or maximum saturation and/or luminance, losing image details.

The color enhancing may be applied to independent pixels of a display, to selected areas of the display and/or to the whole display. For instance, a hue dependent saturation enhancement can be used for the color enhancement.

The term "brightness" may particularly denote an attribute of visual perception in which a source appears to be radiating or reflecting light. In other words, brightness may particularly denote a perception elicited by the luminance of a visual target. In RGB color space the brightness may denote the arithmetic mean of the red, green, and blue color coordinates (i.e., $(R + G + B)/3$).

The term "color space" may particularly denote a set of colors that can be represented by tuples of numbers in a particular color model. Examples of color spaces may be CIE-XYZ, CIE-RGB, the color space of the early National Television Systems Committee (NTSC), the color space of PAL and of the later NTSC (EBU 3213, ITU-R BT.470-2, SMPTE-C), standard RGB (sRGB), Adobe-RGB-(1998), Adobe-Wide-Gamut-RGB, European Color Initiative RGB (eciRGB), ProPhoto-RGB, etc.

The term "color model" may particularly denote an abstract mathematical model describing how colors may be represented as tuples of numbers, for instance, as three or four values of color components, the color components corresponding to primary colors of the color model. A color model and the hence also the corresponding color space may be based for instance base on red, green and blue (RGB) or cyan, magenta, yellow and black (CMYB) primary colors. The color model can be an additive or a subtractive one.

The term "gamut" (for instance, gamut of a device and/or a process) may particularly denote a portion of a color space that can be represented or reproduced (for instance, by the device and/or the process). The device may be a display, particularly an LCD display. Sometimes for practical reasons, the gamut can be represented (not completely), for instance, by a chromaticity diagram, i.e., by its 2-dimensional projection to the xy chromaticity plane.

The term "gamma correction", "gamma nonlinearity", "gamma encoding", "gamma function" or simply "gamma" may particularly denote of a nonlinear operation used to code and decode luminance or tristimulus values in video systems or still image systems. In particular, "gamma encoding" known also as "gamma compression" may be used to encode luminance or RBG values into video signals or a digital file value. "Gamma decoding" or "gamma expansion" is the inverse of the "gamma encoding". Therefore, the gamma decoding may also be referred to as "inverse gamma function". A "gamma value" may be used to quantify a contrast of, for instance, a photographic film. In LCD, such as the laptop displays, the relation between a signal voltage and a light intensity may be very nonlinear so that they can not described by a well defined gamma value. However, in such LCDs a correction onto a signal voltage corresponding to value 2.5 for gamma may be applied in order to approximately get a standard behavior.

The term "curve" when used in the context of image processing or image editing may particularly denote a remapping of an image tonality, the curve being specified as a function from an input level to an output level. The curve may be used to emphasize colors or other elements in a picture. Curves may be applied to all color channels in an image together, or to each color channel individually. Applying a curve to all color channels typically changes the brightness. Applying a curve to individual color channels may be used to stress a color. Applying of a curve may depend on the color space chosen for the color processing.

Whereas some of the color enhancing, for instance a primary color enhancement or skin tone correction may be display independent, the gamut mapping may require a specification of a target gamut (for instance, the display gamut, with no dimming applied). In this sense the term "gamut mapping" may particularly denote a rearrangement of colors near the borders of the gamut. Some colors may need to be shifted to the inside of the gamut as they otherwise could not be represented on an output device, for instance on a display. Such a gamut mapping may be needed, since different devices of, for instance, a TV processing chain may have different gamuts.

The term "locally dimmable LCD" may particularly denote an LCD, in which each primary color component of a backlight corresponding to a single pixel of the locally dimmable display can be dimmed independently. Such a dimming may be described as a 3-dimensional dimming in case when LEDs emitting three primary colors (for instance, red, blue and green) are used for providing the backlight. Also, the dimming of a particular pixel can be performed independently on the other pixels. Such a locally dimmable LCD may be a TV display, a laptop display, a mobile phone display, a digital photoframe display, a display of a DVD-player, etc. The locally dimmable LCD may be, for instance, also be a spectrum sequential display, a color sequential display, a multi-primary display, etc.

The tem "dimming" may particularly denote varying (for instance, by decreasing) of the brightness of light, in particular of a backlight emitted by LEDs in an LCD. In case of a locally dimmable LCD the backlight corresponding to one pixel of the LCD may be supplied, for instance, by three LEDs emitting three respective primary colors such as for instance red, green and blue.

The dimming of the backlight corresponding to one pixel can be described by dimming factors, the dimming factors corresponding to the three respective primary colors forming a triple of independent numerical values denoted as Dim(R,G,B), wherein each of the numerical values may take values, for instance, in the interval [0,1]. If this is the case, then the triple Dim(R,G,B) = (1, 1, 1) corresponds to no dimming applied and the triple Dim(R,G,B) = (0, 0, 0) corresponds to a complete dimming applied. Depending on the dimming factors, three respective driving current factors may be determined. Driving currents of the three LEDs corresponding to the three primary colors can then be adjusted based on the respective driving current factors in order to actually perform the dimming of the light emitted by the backlight LEDs. However, the concept of the dimming as described above should not be restricted to the 3-dimensional dimming described with respect to the three primary colors. LEDs emitting primary colors corresponding to different color spaces may be used, hence, in general the number of LEDs corresponding to one pixel is not necessarily restricted to three. Also, the primary colors are not necessarily restricted to red, green and blue. Therefore, in general the dimming factors corresponding to one pixel may be in general represented by tuples (for instance, quadruplets in case when the color space is based on four primary colors) of numerical factors. The dimming factors, for instance, as described by the triple Dim(R,G,B) are determined based on the color enhanced video data corresponding to the pixel. Hence the dimming factors may vary from pixel to pixel and for a fixed pixel the may vary with the time. Put in other words, the dimming factors may vary in the spatial domain as well as in the temporal domain. In general, the dimming may be performed, for instance, in order to increase contrast, save energy etc. The dimming factors corresponding to a particular pixel may be based on the enhanced video corresponding at least to this particular pixel. However, also the enhanced video data corresponding to further pixels (for instance, neighboring pixels of the particular pixels) may be used in order to determine the dimming factors corresponding to the particular pixel.

However, if a dimming in accordance with the determined dimming factors would be applied directly to the color enhanced video data, quality of the color represented by the pixel could possibly be decreased due to, for instance, a cross-talk effect in color filters and/or temperature fluctuations effects. The cross-talk effect in color filters may result from a partial overlap of a one-color LED spectrum and an adjacent color filter spectrum. The temperature fluctuations effects may be caused by different local temperatures in the LED package due to dynamically changing LED driving current values, the driving currents being changed in accordance with spatially and temporarily varying dimming factors. Therefore, using the same color processing method as used with no local dimming applied may result in significant hue, saturation and luminance variations in the spatial and/or the temporal domain. Moreover, since the dimming factor may depend on the content of the video data, these variations may also be strongly content dependent.

With the present invention, a possible impact of the above mentioned effects on color rendering may be minimized. Hence, with the present invention, a method and a system for color processing video data, which method efficiently improves color reproduction on a locally dimmable LCD may be provided.

As used herein, reference to a computer program is intended to be equivalent to a reference to a program element and/or a computer readable medium containing instructions for controlling a computer system to coordinate the performance of the above described method.

The computer program element may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or other programmable device to carry out the intended functions. The computer program may be available from a network, such as the WorldWideWeb, from which it may be downloaded.

The invention may be realized by means of a computer program respectively software. However, the invention may also be realized by means of one ore more specific electronic circuits respectively hardware. Furthermore, the invention may also be realized in a hybrid form, i.e. in a combination of software modules and hardware modules.

Next, further exemplary embodiments of the method will be explained. However, these embodiments also apply to the system.

According to an exemplary embodiment of the invention, the method further comprises determining a dynamic gamut corresponding to the pixel of the locally dimmable liquid crystal display, wherein the dynamic gamut further corresponds to the determined dimming factors and, wherein determining the color correction of the color enhanced is based on the dynamic gamut.

The already mentioned above cross-talk effects and temperature fluctuations effects in a locally dimmable LCD may result in changing the gamut corresponding to the pixel and hence, also the corresponding white point. Hence, possible dynamic gamut deviations due to the cross-talk effects and the temperature fluctuations effects may occur as a result of the local dimming. Therefore, it may be advantageous to determine a color correction of the enhanced video data corresponding to the pixel in dependence on the dynamic gamut, which corresponds to the determined dimming factors corresponding to the backlight of the pixel. Put in other words, in contrary to the static gamut, which corresponds to the pixel with no dimming applied (for instance, with the dimming factors Dim(R,G,B) = 1), the dynamic gamuts corresponds to the dimming factors which may take values in a whole range of dimming factors (for instance, the dimming factors Dim (R,G,B) taking values in the 3-dimensional cube $[0,1]^3$), wherein the dynamical gamut may be dependent on the time and/or the position of the pixel, the dependence resulting from the temporarily and/or spatially varying dimming factors. The term "white point", "reference white" or "target white" may particularly denote a set of tristimulus values or chromaticity values that define the color "white" in an image capture, an image encoding or an image reproduction. The definition of "white" may depend on an application.

The term "chromaticity" may particularly denote an objective specification of a quality of a color regardless of its luminance, that is, as the quality determined by its colorfulness (or saturation, chroma, intensity or excitation purity, depending on the color model) and its hue. For instance, the white point of a sRGB (standard RGB) display is a xy chromaticity of (0.3127, 0.3290). All other chromaticities may be defined in reference to the white point using polar coordinates. The hue may be represented by the angular component and the purity may be represented by the radial component normalized by the maximum radius for that hue. For instance, in a Hue Saturation Value (HSV) color model the purity may be roughly equivalent to the saturation.

The term "colorfulness" may particularly denote difference of a color against gray.

The term "chroma" may particularly denote the difference of a color against the brightness of another color which appears white under similar viewing conditions.

Term "saturation" may particularly denote the difference of a color against its own brightness.

The term "excitation purity" (or "purity" for short) of a stimulus may particularly denote the difference from an illuminant's white point relative to the furthest point on the chromaticity diagram with the same hue.

The term "relative luminance" (or "luminance" for short) may particularly denote a relative luminance, i.e. the photometric measure of the amount of light passing trough or emitted from a particular area, and falling into a given solid angle normalized to 1 or 100 for a reference white. For color spaces such as XYZ, xyY, etc the letter Y refers to the luminance.

Technically (for instance, as defined by the CCAM02 model), the term "hue" may particularly denote the degree to which a stimulus may be described as similar to or different from stimuli defined as red, green and yellow (i.e., the unique hues). For instance, a dominant wavelength may represent a physical analog to the hue. On a chromaticity diagram a half-line may be drown starting from a white point through coordinates of a color in question, until it intersects a spectral locus. The wavelength at which the half-line intersects the spectral locus is the dominant wavelength.

According to an exemplary embodiment of the invention, the method further comprises determining a metric based on a comparison of the dynamic gamut and a static gamut, the static gamut corresponding to the pixel of the locally dimmable liquid crystal display in case when no dimming is applied, wherein determining the color correction of the color enhanced is based on the metric.

Since the color enhancing is based on the static gamut, i.e., a gamut corresponding to no dimming or boosting applied, it may be advantageous to compare the dynamic gamut corresponding to the pixel to the static gamut corresponding to the same pixel. These two gamuts may be different. Therefore, in order to determine the color correction, it may be of an advantage to determine to which extent these gamuts differ and hence, compare these two gamuts. The result of the comparison can be represented as the metric, the metric describing the relative position of the two gamuts. For instance, in xy chromaticity diagram given a color hue value, metric can represent ratio between maximum possible saturations of the static and dynamic gamuts. Also, the metric can represent a 3 by 3 conversion matrix between static and dynamic gamuts and can vary per color spatially (from pixel to pixel) and/or in time. Therefore, the metric may also be referred to as a dynamic gamut metric. The static gamut may be the same for each pixel.

According to an exemplary embodiment of the invention, the metric is a function of a hue of the pixel.

For practical purposes, a simplified definition of the metric may be adopted, which definition uses a metric being described as a real function of the hue. This means that the metric takes for all colors of a hue the same value, the value expressing a relative disposition of the dynamic gamut corresponding to the pixel and of the static gamut corresponding to the same pixel. Again the value of the metric for a fixed hue may vary with pixels and/or in time. Such a definition may be advantageous for computational purposes.

According to an exemplary embodiment of the invention, the value of the metric for the hue is given by a weighted ratio between a first color distance and a second color distance, the first color distance being the distance between a static white point and a point corresponding to the hue on a boundary of the static gamut boundary, the second color distance being the distance between the static white point and a point corresponding to the hue on a boundary of the dynamic gamut.

The metric as defined according to this exemplary embodiment, may be seen as a good approximation to the more precise notions of the metric as defined above, in the following sense: Although the white point of the dynamic gamut may be very different when compared to the static white point, this difference is not taken into account for the purposes of determination of the metric, according to this embodiment. In this sense, the determination of the metric can be seen as based on the static white point. However, also a determination of the metric which takes account of the difference between the white points of the static and dynamic gamuts is possible. Also for this definition of the metric, the metric in all hues may be different for different pixels and/or time instances, which makes the metric dependent on the dynamic gamut. The first color distance and the second color distance may be determined in the xy chromaticity diagrams corresponding to the dynamic gamut and the static gamut.

According to an exemplary embodiment of the invention, determining the color correction video data is further based on intermediate video data, the intermediate video data being associated with the color enhancing the video data.

The intermediate video data may comprise the information, with respect to the pixel, about the original color (i.e. the color represented by the video data to be color enhanced) and/or about the color that is enhanced by using, for instance, a hue dependent saturation enhancement (i.e. the color represented by the video data enhanced by using the color enhancement) and/or parameter settings related to the color enhancing the video data such as for instance hue shift parameters. Taking into account the intermediate data while determining the color correction may increase the accuracy and robustness of determining the color correction.

According to an exemplary embodiment of the invention, the color correction comprises a further color enhancing of a color in a hue when the metric for the hue is higher than a reference value.

A value of the metric higher than the reference value (for instance, higher than 1), indicates that in the direction of the hue (i.e., for the angle defining the hue in the polar coordinate system originating in the static white point) the dynamic gamut extends further than the static gamut, when the gamuts are represented in the xy chromaticity plane. Hence, colors in the corresponding hue may be further enhanced, when the metric for this hue is higher than the reference value. As a result, the colors in the hue may be reproduced consistently on the LCD, when a dimming is applied in correspondence with the determined dimming factors, which dimming factors cause the metric for the hue being higher than the reference value.

According to an exemplary embodiment of the invention, the color correction comprises a desaturation and/or a clipping of a color in a hue when the metric for the hue is lower than a reference value.

A value of the metric lower than the reference value (for instance, lower than 1), indicates that in the direction of the hue (i.e., for the angle defining the hue in the polar coordinate system originating in the static white point) the static gamut extends further than the dynamic gamut, when the gamuts are represented in the xy chromaticity plane. Hence, colors in the corresponding hue may need a desaturation and/or clipping, when the metric for this hue is lower than the reference value. As a result, the colors in the hue may be reproduced consistently on the LCD, when a dimming is applied, the dimming corresponding to the determined dimming factors, which dimming factors cause the metric for the hue being lower than the reference value.

According to an exemplary embodiment of the invention, determining the color correction of the color enhanced video data is carried out in such a manner that a hue and a luminance of a color represented by the enhanced video data is preserved within a dimming procedure corresponding to the determined dimming factors.

Such a correction of the color enhanced video data may be advantageous, for instance, in applications where the possibilities to inherit intermediate data related to the color enhancing of video data (for instance parameter settings such as hue shift parameters) may be limited. Therefore, as an alternative intermediate video data may not necessarily be used for determining the color correction. In this case, the color enhancement may target on a preservation of the hue and the luminance as they are defined by the color enhanced video data. For instance, a simple saturation boosting or desaturation may be applied, depending on the metric.

According to an exemplary embodiment of the invention, the method further comprises applying an inverse gamma function to the color in the hue.

An additional applying of an inverse gamma function may further improve the degree of preservation, for instance, of the hue and/or the luminance. Hence, the perceived temporal stability of color rendering may be further increased, due to for instance improved contrast of the images displayed on the locally dimmable LCD.

According to an exemplary embodiment of the invention, determining the metric is based on an interpolation using predetermined metrics, the predetermined metrics being based on dynamic gamuts corresponding to a preset set of tuples of dimming factors.

These predetermined metrics may, for instance, correspond to extreme gamut settings such as for instance gamut settings corresponding to maximal/minimal dimming factors actually used for dimming one or more LEDs corresponding to one pixel. Depending on the application, the predetermined metrics may be chosen such that any actual metric can be approximated by interpolating within a predetermined accuracy. In this manner, the determination of the metric can be simplified and speeded up.

Further, the processing the video data based on the determined color correction may comprise a dynamic gamut mapping. For instance, in course of performing the dynamic gamut mapping, intermediate video data corresponding to the pixel of the locally dimmable liquid crystal display may be updated using the determined color correction corresponding to the pixel of the locally dimmable liquid crystal display and then linearly mapped into the dynamic gamut. Similarly, in case when the intermediate video data is not used, the determined color correction corresponding to the pixel of the locally dimmable liquid crystal display may be used to update the enhanced video data corresponding to the pixel of the locally dimmable liquid crystal display. The updated enhanced video data may then be mapped into the dynamic gamut.

Next, further exemplary embodiments of the system will be explained. However, these embodiments also apply to the method.

The dynamic color enhancement block may further perform updating of intermediate data and/or enhanced video data. The gain block may perfume processing the video data based on the determined color correction, wherein the processing may comprise a dynamic gamut mapping.

The system may further comprise a backlight control block and a timing control block. The backlight control block may perform controlling of light emitting diodes corresponding to the individual pixels of the locally dimmable LCD, based on current driving factors provided by the diming block, the current driving factors being determined based on the determined dimming factors. The timing control block may perform controlling of the locally dimmable LCD based on the processed video data outputted by the gain block.

The system may be monolithically integrated as a system on a chip (SoC). However, the static color enhancement block may also be located on a different chip as the dynamic color enhancement block. Any process technologies like CMOS, BIPOLAR, BICMOS may be implemented in course of the monolithic integration. Micro- and nano-technologies like lithography, etch or deposition techniques may be implemented in course of the monolithic integration.

The aspects defined above and further aspects of the invention are apparent from the examples of embodiment to be described hereinafter and are explained with reference to these examples of embodiment.

BRIEF DESCRIPTION OF THE DRAWINGS

The invention will be described in more detail hereinafter with reference to examples of embodiment but to which the invention is not limited.

Fig. 1 illustrates possible gamut deviations in dependence on LED dimming factors according to an exemplary embodiment of the invention.

Fig. 2 illustrates a system for color processing for a liquid crystal display according to an exemplary embodiment of the invention.

Fig. 3 illustrates a comparison of three gamuts in the xy chromaticity plane according to an exemplary embodiment of the invention.

Fig. 4 illustrates a metric determined by a dynamic enhancement block as a function of a hue according to an exemplary embodiment of the invention.

Fig. 5 illustrates a mixGain parameter according to an exemplary embodiment of the invention.

Fig. 6 illustrates steps of method for processing video data according to an exemplary embodiment of the invention.

DESCRIPTION OF EMBODIMENTS

The illustration in the drawing is schematical.

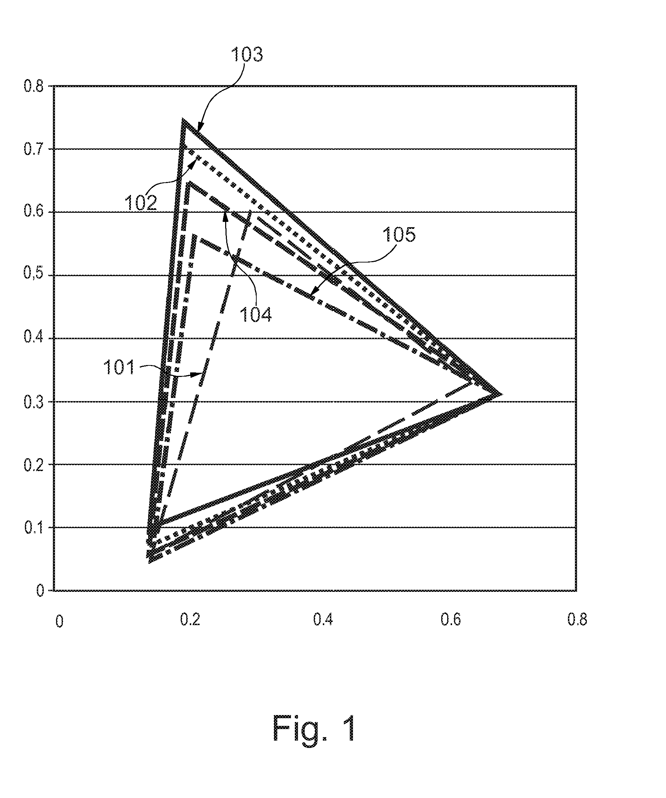

**Fig. 1** illustrates possible gamut deviations in dependence on LED dimming factors according to an exemplary embodiment of the invention. Gamuts 101 to 105 are represented in the xy projection of the CIE 1931 XYZ (for short XYZ) color space, i.e. in a 2 dimensional xy chromaticity plane. The XYZ color space is described by tristimulus values X, Y and Z which are roughly red, green and blue, respectively. However, the X, Y and Z values are not physically observed red, green, blue colors. Rather, they may be thought of as "derived" parameters from the red, green, blue primary colors. The XYZ color space is deliberately designed so that the Y parameter is a measure of the brightness or luminance of a color. The chromaticity of a color is then specified by the two derived parameters x and y, two normalized values which are functions of all three tristimulus values X, Y, and Z. For the representation of the gamuts in a 2-dimensional chromaticity plane of Fig. 1, the above mentioned two parameters (chromaticities) defined as $x = X/(X+Y+Z)$ and $y = Y/(X+Y+Z)$ are used as chromaticity coordinates, the horizontal axis corresponding to the y chromaticity and the vertical axis corresponding to the x chromaticity. Hence, more precisely, the chromaticity plane xy can be viewed also as a 2-dimensional projection of the xyZ color space. The corresponding representation of the gamut may be referred to as a xy chromaticity diagram. In Fig. 1 the gamut represented by triangle 101 is the standard RGB (sRGB) gamut, which serves in Fig. 1 as a reference gamut. The dimming can be applied individually to each of three LED s, i.e., the red, green and/or blue LED, the three LEDs corresponding to one pixel of the locally dimmable LCD. This means that the dimming may be applied locally. The dimming factors of the R, G and B values are represented by their respective triples Dim(R,G,B). A gamut 102 correspond to dimming factors Dim(R,G,B) = (1, 1, 1), i.e. the gamut 102 represents a gamut of a wide gamut display (i.e., a display having a gamut wider than the reference gamut) with no dimming applied. Gamuts 103, 104 and 105 represent gamuts resulting from application of the respective dimming factors Dim(R,G,B) = (1, 1, 1/2), Dim(R, G, B) = (1, 1/2, 1) and Dim(R, G, B) = (1, 1/4, 1). In general, since the dimming is local, the dimming factors corresponding to different individual pixels may be different. Hence, the gamuts corresponding to different individual pixels may also be different.

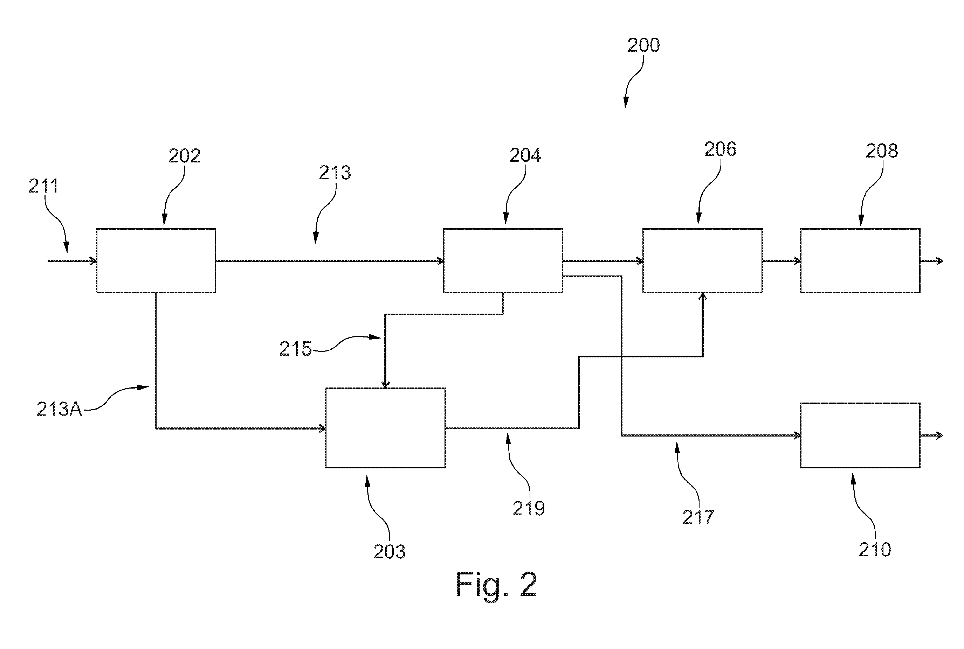

**Fig. 2** illustrates a system for color processing for a liquid crystal display according to an exemplary embodiment of the invention. The system 200 comprises a color rendering part, the color rendering part being formed by a static color enhancement block 202 (i.e., an enhancement block used for a display with static gamut when no dimming is applied) optionally connected (for instance, directly) to a dynamic color enhancement block 203 (i.e., a color enhancement block controlled by a dynamic gamut metric). The system further comprises a local RGB dimming chain. The local RGB dimming chain is formed by a 3-dimensional dimming block 204, a gain block 206, a timing control (TCON) block 208 and a backlight control (BCON) block 210. The 3-dimensional dimming block 204 is connected (for instance, directly) to the gain bloc 206 and (for instance, directly) to the BCON block 210. The gain block 206 is further connected (for instance, directly) to the TCON block 208. The static color enhancement block 202 is connected (for instance, directly) to the local RBG dimming chain through the 3-dimensional dimming block 204. The local RGB dimming chain is connected to the dynamic color enhancement block 203, particularly the 3-dimensional dimming block 204 is connected (for instance, directly) to the dynamic color enhancement block 203, which in turn connects (for instance, directly) to the gain block 206.

In operation, a video data 211 is inputted to the static color enhancement block 202, where it is color enhanced. The color enhanced video data 213 outputted from the static color enhancement block 202 is then send to the 3-dimensional dimming block 204, where based on the color enhanced video data 213 values of dimming factors Dim(R, G,B) corresponding to RGB color components are determined for each individual pixel. Alternatively, the values of dimming factors can be determined for groups of pixels, for instance for groups of spatially and/or temporarily closed pixels. Based on the value of dimming factors a corresponding dynamical gamut is determined (for instance, for each pixel or for each group of pixels with the same dimming factors) in the 3-dimensional dimming block 204 and a dynamic gamut data 215 comprising information about the determined dynamical gamut is sent to the dynamic color enhancement block 203. Further, based on the values of dimming factors corresponding to individual pixels, values of K-dimming factors 217 (for instance, values of driving current factors of individual backlight LEDs) are determined in the 3-dimesional dimming block and sent to the BCON 210. In the BCON 210 values of the K-dimming factors are used for the actual adjusting of the backlight LEDs. Also, the color enhanced video data 213 is sent further to the gain block 206.

In case when the static color enhancement block 202 is connected to the dynamic static color enhancement block 203, an intermediate video data 213A is also outputted by the static color enhancement block 202. The intermediate video data 213A may comprise the information, for instance with respect to each pixel, about the original color and/or about the color that is color enhanced by a e.g. hue dependent saturation enhancement during the color enhancement in the static color enhancement block 202 and/or parameter settings from the static color enhancement block 202, for instance hue shift parameters, that may be used for the further processing. The intermediate video data 213A is inputted to the dynamic color enhancement block 203 where the intermediate video data 213A is updated based on the dynamic gamut data 215. To this end, based on the dynamic gamut data 215, a metric is determined for each pixel or for each group of pixels with the same dimming factors by the dynamic color enhancement block 203. The metric gives one value for each hue. This metric value can be for instance defined in each hue as a ratio between two color distances in xy-chromaticity plane. In this case, a weighting as a tuning parameter can be used additionally controlling a level of an enhancement or a desaturation in a predetermined manner. This weighting may provide for more flexibility of the color processing. The first color distance is the distance between a static white point (i.e., a display white point with no dimming applied) and a point corresponding to the hue on the boundary of the static gamut, the second color distance being the distance between a static white point and a point corresponding to the hue on the boundary of the dynamic gamut. Although the white point of the dynamic gamut may be very different when compared to the static white point, this difference is not taken into account for the purposes of determination of the metric. In this sense, the determination of the metric can be seen as based on the static white point. However, also a determination of the metric which takes account of the difference between the white points of the static and dynamic gamuts is possible. In general, any metric can be expressed, for instance, as a 3 by 3 matrix relating a position of a color in a static gamut to the dynamic gamut primaries and may vary per pixel and/or with time. Since the dynamic gamut data 215 may vary with pixels and/or in time, the metrics in all hues may be different for different pixels and/or time instances, which makes the metric dependent on the dynamic gamut.

The intermediate video data 213A is updated in the dynamic color enhancement block 203 and the updated video data 219 is sent to the gain block 206. The updated data comprise information concerning a color correction determined by the dynamic color enhancement block 203. The color correction concerns the color enhanced video data corresponding to individual pixels of the locally dimmable liquid crystal display. In course of the determining the color correction the dynamic color enhancement block 203 compares for each hue the values of the metric to a given reference value (for instance, the value 1). Based on the result of comparison, the dynamic color enhancement block 203 further processes the color enhanced video data either by a further enhancing of colors in a hue or by a clipping and/or a desaturation of colors in the hue.

A hue preserving further color enhancement or desaturation is controlled using following expressions for the updated data OutXYZ:

1) For hues where the metric, is higher than a given reference value (for instance, the value 1):

$$\text{OutXYZ} = \alpha1 \times (1\text{-mixGain}) \times \text{ExtremeXYZ} + \text{mixGain} \times \text{OutColEnhXYZ}, \qquad (1)$$

where mixGain is a mixing parameter that determines how much of the further color enhancement is applied; $\alpha1$ is an amplification factor; ExtremeXYZ is the color that is extremely enhanced by using a hue dependent saturation enhancement in the static color enhancement block 202, i.e., the color represented by the intermediate video data 213A; and OutColEnhXYZ is the output color of the static color enhancement block, i.e., the color represented by the enhanced video data 213. The mixGain parameter may be a function of InXYZ and/or the OutColEnhXYZ colors.
2) For hues where the metric is lower than 1:

$$\text{OutXYZ} = \alpha2 \times (1\text{-mixGain}) \times \text{InXYZ} + \text{mixGain} \times \text{OutColEnhXYZ}, \qquad (2)$$

where mixGain is a mixing parameter that determines how much of original input color, i.e. of the color represented by the video data 211, is used for a dynamic gamut mapping; alfa2 is an amplification factor; InXYZ is the original input color,i.e. color represented by the video data 211; and OutColEnhXYZ is the output color of the static color enhancement block, i.e., the color represented by the enhanced video data 213. Here the mixGain parameter may be a function of InXYZ and/or the OutColEnhXYZ colors. Depending on the metric also a clipping and/or inverse gamma function may be applied by the dynamic color enhancement block.

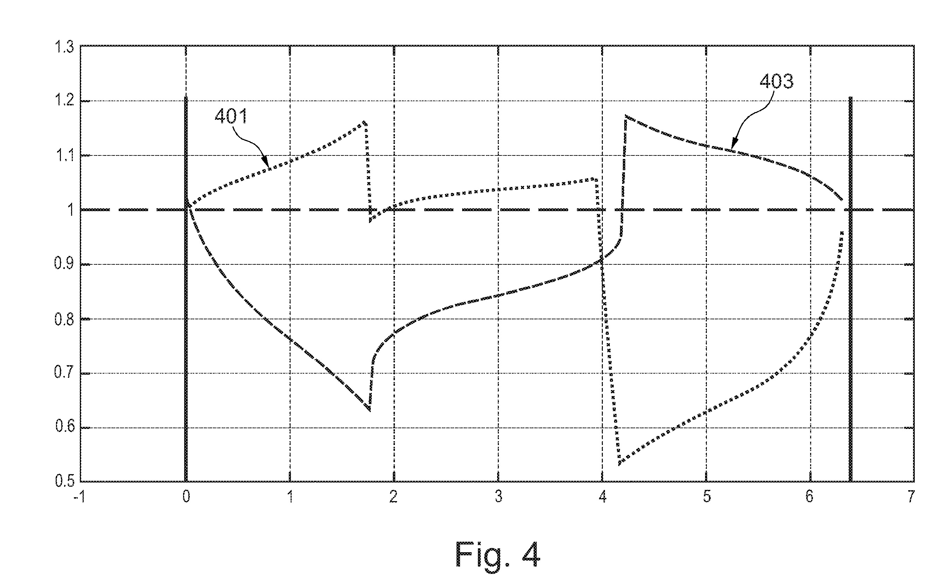

As soon as an output color OutXYZ is determined by the dynamic enhancement block 203, the correspondingly updated video data 219 is transmitted to the gain block 206 of the RGB local dimming chain, where they are mapped into the dynamic gamut, actually realizing extra enhancement or desaturation, i.e. the dynamic gamut mapping is performed. The video data processed by the gain block 208 are then sent to the TCON 208 of the LCD display.
The above described exemplary embodiment of the invention is based on equations (1) and (2), in which video data ExtremeXYZ and InXYZ from the static color enhancement block are used, respectively. This assumes that there is a possibility to inherit, during the further color enhancement the parameter settings from the static color enhancement block (for instance, hue shift parameters) or the video data 211. For instance, if the metric is lower than 1 and the desaturation is applied, this desaturation is applied such that when the actual dimming corresponding to the determined dimming factors will be applied, the color represented by desaturated color enhanced video data will be displayed substantially close to the color represented by the enhanced video data 213, i.e., towards to the original input color represented by the video data 211. However, in general using an internal data from previous blocks, for instance the intermediate video data form the static color enhancement block, may limit the applicability of the method. For instance, if a general color block, i.e., a color block comprising the static color enhancement block but not comprising the dynamic color enhancement block, is located in a different chip as a display processing chip comprising the dynamic color enhancement block, it may be difficult to transfer intermediate video data to a display processing chip.
Therefore, as an alternative no intermediate video data from previous blocks, in particular from the static color enhancement block 202, are transmitted to and used by the dynamic color enhancement block 203. In this case, the connection between the static color enhancement block 202 and the dynamic color enhancement block 203 is not necessary. The dynamic color enhancement block 203 can target on a preservation of hue and luminance as they are defined by the input signal to the 3-dimensional dimming block, i.e. by the color enhanced video data 213. Therefore, instead of equations (1) and (2) a simple saturation boosting can be applied. The amount of saturation boosting (or desaturation) is also controlled by the metric determined as described above by the dynamic color enhancement block 203 (for instance, by a metric as illustrated in Fig. 4). The corresponding equations employed in this case read

$$\text{sat\_new} = \alpha3 \times \text{sat}, \qquad \text{hue\_new} = \text{hue}, \qquad \text{lum\_new} = f(\text{sat\_new}, \text{lum}), \qquad (3)$$

where, $\alpha3$ is an amplification factor sat, hue and lum are the saturation, hue and luminescence components of the input signal to the 3-dimensional dimming block, i.e. color enhanced video data 213, respectively, and sat_new, hue_new and lum_new are the respective updated components of the input color and f is a transfer function for the luminance component, i.e., as represented by the updated data 219. The transfer function f can handle needed luminance dimming in case when the updated saturation is very high, while keeping high luminance value can lead to a so-called fluorescence effect. The amplification factor $\alpha3$ and the transfer function f are determined by the dynamic color enhancement block 203 based on the metric. Hence the color enhanced data 213 is updated in the dynamic color enhancement block 203 and the updated video data 219 is sent to the gain block 206. The updated data comprise information concerning a color correction determined by the dynamic color enhancement block 203. Also according to this embodiment, the correspondingly updated video data 219 is transmitted to the gain block 206 of the RGB local dimming chain, where they are linearly mapped into the dynamic gamut, i.e. the dynamic gamut mapping is performed. The video data processed by the gain block 208 are then sent to the TCON 208 of the LCD display

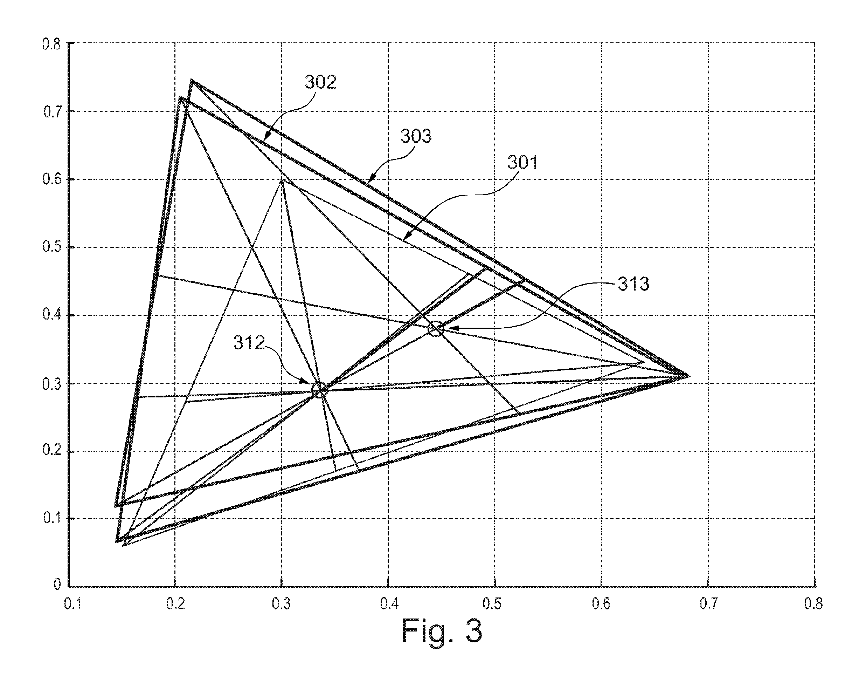

**Fig. 3** illustrates a comparison of three gamuts in the xy chromaticity plane according to an exemplary embodiment of the invention. Hence, three xy chromaticity diagrams corresponding to the respective three gamuts are compared. As mentioned above, an xy chromaticity diagram is based on the CIE 1931 XYZ color space based on tristimulus values called X, Y, and Z as defined by the International Commission on Illumination (CIE) in 1931. The relation between the values X, Y and Z and the xy chromaticities is $x = X/(X + Y + Z)$ and $y = Y/(X + Y + Z)$. Gamut triangles 301, 302 and 303 represent a source EBU (European Broadcasting Union) gamut, which serves as a reference gamut, a static wide gamut (i.e. a wide display gamut with no dimming applied) and a dynamic wide gamut (i.e., a wide gamut corresponding to a particular dimming), respectively. Fig. 3 shows a relative disposition of the wide static gamut 302 and 303 as well as the corresponding shift between the white point of the static wide gamut, i.e. static white point of the wide gamut display, 312 and the white point of the dynamic wide gamut 313, i.e. static white point of the wide gamut display.

**Fig. 4** illustrates a metric determined by a dynamic enhancement block as a function of a hue according to an exemplary embodiment of the invention. In particular, two metrics are plotted as two curves 401 and 403 corresponding to values of dimming factors Dim(R,G,B) = (1, 1, 0.25) and Dim(R,G,B) = (1, 0.25, 1), respectively. The hue takes values in the interval $[0, 2\pi]$. Metrics represented by the respective curves 401 and 402 are compared in each hue to the reference value 1. A value of the metric, for instance, of the metric represented the curve 401 higher than 1, indicates that colors in the corresponding hue can be further enhanced, when values of dimming factors Dim(R,G,B) = (1, 1, 0.25) have been determined in the 3-dimesional dimming block. Similarly, a value of the metric, for instance, of the metric represented the curve 401 lower than 1, indicates that colors in the corresponding hue require a clipping and/or a desaturation, when values of dimming factors Dim(R,G,B) = (1, 1, 0.25) have been determined in the 3-dimesional dimming block. Although in Fig. 4, the two metrics are represented by continuous curves. The values of a metric can also be computed for a discrete subset of hues (for instance, equidistantly spaced ones) and a piece-wise linear functions can be used for interpolating between the computed metric values. In one embodiment, a set of metrics corresponding to a number of different dynamic gamuts (i.e., corresponding to the different values of dimming factors Dim(R,G,B)) can be computed in advance and stored by the dynamic color enhancement block. These different dynamic gamuts may correspond, for instance, to the extreme gamut settings such as for instance gamut settings corresponding to maximal/minimal dimming factors actually used for dimming one or more LEDs corresponding to one pixel. Based on the dynamic gamut sent by the 3-dimesional dimming block to the dynamic color enhancement block, the dynamic color enhancement block may determine the corresponding metric by interpolating between the stored metrics. Depending on the application, the predetermined metrics may be chosen such that any actual metric (i.e. any possible metric) can be approximated by interpolating within a predetermined accuracy. In general, the respective further enhancement, clipping, desaturation of colors in a hue will be performed and/or inverse gamma function will be applied for the colors in the hue such that the hue and luminance will be preserved as much as possible, in order to improve perceived temporal stability of color rendering.

Saturation variations also contribute to perceived stability (especially for memory colors and desaturated areas in general), however Just Noticeable Differences (JNDs) in the saturation direction are larger than in hue and luminance directions.

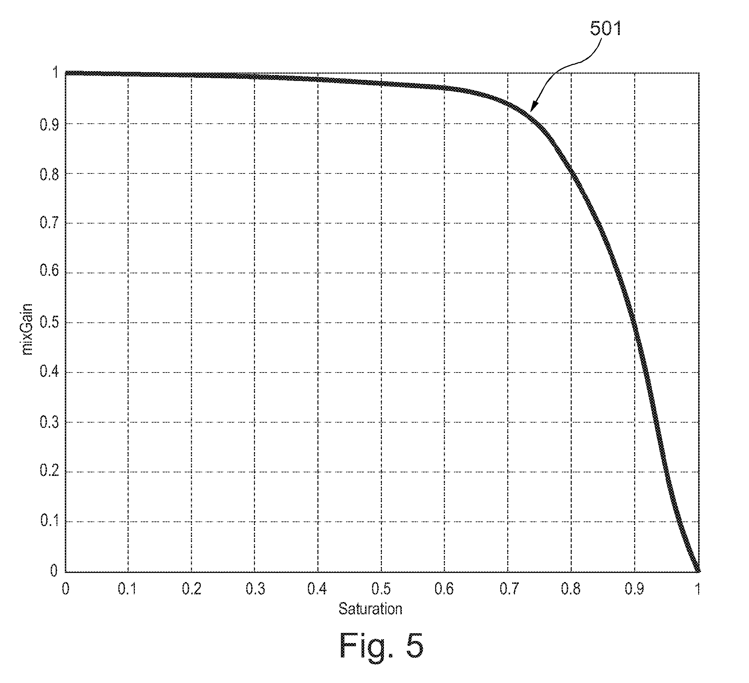

**Fig. 5** illustrates a mixGain parameter according to an exemplary embodiment of the present invention. The mixGain is a function of normalized saturation represented by the curve 501.

A choice of mixGain parameter such as for instance illustrated by Fig. 5 ensures consistent color reproduction for colors that can be mapped without clipping to all possible backlight dimming combinations (usually low saturated colors). On the other hand, for very saturated colors, extra enhancement or compression takes place. The choice of the mixGain curve can be hue dependent.

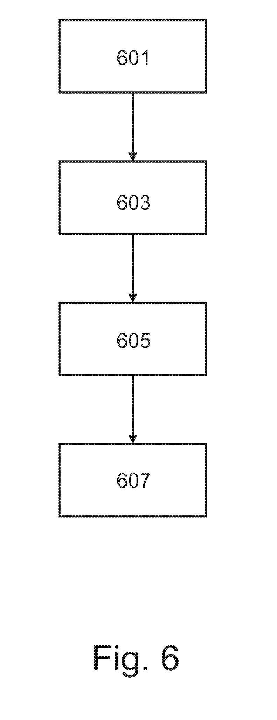

**Fig. 6** illustrates steps of method for processing video data according to an exemplary embodiment of the present invention. The method for processing video data, the video data being adapted for being displayed on a locally dimmable liquid crystal display, the method comprises a step 601 of color enhancing the video data, a step 603 of determining dimming factors corresponding to primary color components of the video data corresponding to a pixel of the locally dimmable liquid crystal display based on the color enhanced video data, a step 605 of determining a color correction of the color enhanced video data corresponding to the pixel of the locally dimmable liquid crystal display based on the dimming factors, and a step 607 of processing the video data based on the determined color correction.

The method may be combined with further measures concerning a backlight design, which measures may be provided in order to further minimize the impact of the dynamically changing gamut (i.e., of the dynamic gamut) on the color rendering. For instance, the LED spectra stability against temperature changes may be improved. Further, an optical feedback may be employed to compensate for color spectra fluctuations. Furthermore, a well calibrated backlight temperature model may be used and the backlight current and/or voltage drive values may be updated using correcting coefficients derived from this model.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The words "comprising" and "comprises", and the like, do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

**Claims**

1.  A method for processing video data, the video data being adapted for being displayed on a locally dimmable liquid crystal display, the method comprising
    color enhancing the video data (211),
    determining dimming factors corresponding to primary color components of the video data corresponding to a pixel of the locally dimmable liquid crystal display based on the color enhanced video data (213),
    determining a color correction of the color enhanced video data (213) corresponding to the pixel of the locally dimmable liquid crystal display based on the dimming factors, and
    processing the video data based on the determined color correction.

2.  The method of claim 1, further comprising
    determining a dynamic gamut (303) corresponding to the pixel of the locally dimmable liquid crystal display, wherein the dynamic gamut (303) further corresponds to the determined dimming factors and, wherein
    determining the color correction of the color enhanced video data (213) is based on the dynamic gamut (303).

3.  The method of claim 2, further comprising
    determining a metric (401, 403) based on a comparison of the dynamic gamut (303) and a static gamut (302), the static gamut (302) corresponding to the pixel of the locally dimmable liquid crystal display in case when no dimming is applied, wherein
    determining the color correction of the color enhanced video data (213) is based on the metric (401, 403).

4.  The method of claim 3, wherein
    the metric (401, 403) is a function of a hue of the pixel.

5.  The method of claim 4, wherein
    the value of the metric for the hue is given by a ratio between a first color distance and a second color distance,
    the first color distance being the distance between a static white point (312) and a point corresponding to the hue on a boundary of the static gamut (302) , and
    the second color distance being the distance between the static white point (312) and a point corresponding to the hue on a boundary of the dynamic gamut (303).

6.  The method of claim 1, wherein

determining the color correction of the color enhanced video data is further based on intermediate video data (213A), the intermediate video data (213) being associated with the color enhancing the video data.

7. The method of claims 4, wherein
the color correction comprises a further color enhancing of a color in a hue when the metric (401, 403) for the hue is higher than a reference value.

8. The method of claims 4, wherein
the color correction comprises a desaturation and/or a clipping of a color in a hue (401, 403) when the metric for the hue is lower than a reference value.

9. The method of claim 1, wherein
determining the color correction of the color enhanced video data (213) is carried out in such a manner that a hue and a luminance of a color represented by the enhanced video (213) data is preserved within a dimming procedure corresponding to the determined dimming factors.

10. The method of claim 8 or 9, the method further comprising
applying an inverse gamma function to the color in the hue.

11. The method of claim 3, wherein
determining the metric (401, 403) is based on an interpolation using predetermined metrics, the predetermined metrics being based on dynamic gamuts (303) corresponding to a preset set of tuples of dimming factors.

12. A system for processing video data, the video data being adapted for being displayed on a locally dimmable liquid crystal display, the system comprising
a static color enhancement block (202) for color enhancing of video data (211),
a dimming block (303) for determining dimming factors corresponding to primary color components of the video data corresponding to a pixel of the locally dimmable liquid crystal display based on the color enhanced video data (213),
a dynamic color enhancement block (203) for determining a color correction of the color enhanced video data (213) corresponding to the pixel of the locally dimmable liquid crystal display based on the dimming factors, and
a gain block (206) for processing the video data based on the determined color correction.

13. A program element for processing video data, the video data being adapted for being displayed on a locally dimmable liquid crystal display, wherein
the program element, when being executed by a data processor, is adapted for controlling the method as set forth in any one of the claims 1 to 11.

Fig. 1

Fig. 2

EP 2 309 761 A1

Fig. 3

EP 2 309 761 A1

Fig. 4

Fig. 5

```
┌─────────────────────┐
│                     │
│        601          │
│                     │
└──────────┬──────────┘
           │
           ▼
┌─────────────────────┐
│                     │
│        603          │
│                     │
└──────────┬──────────┘
           │
           ▼
┌─────────────────────┐
│                     │
│        605          │
│                     │
└──────────┬──────────┘
           │
           ▼
┌─────────────────────┐
│                     │
│        607          │
│                     │
└─────────────────────┘
```

Fig. 6

Europäisches
Patentamt

European
Patent Office

Office européen
des brevets

**EUROPEAN SEARCH REPORT**

Application Number

EP 09 17 1288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/279372 A1 (BROWN ELLIOTT CANDICE H [US] ET AL BROWN ELLIOTT CANDICE HELLEN [US] E) 6 December 2007 (2007-12-06) * paragraph [0102] - paragraph [0109] * ----- | 1-3,12, 13 | INV. H04N9/67 |

TECHNICAL FIELDS
SEARCHED (IPC)

H04N
G09G

The present search report has been drawn up for all claims

| Place of search | Date of completion of the search | Examiner |
|---|---|---|
| Munich | 13 January 2010 | Penchev, Petyo |

EPO FORM 1503 03.82 (P04C01)

**ANNEX TO THE EUROPEAN SEARCH REPORT
ON EUROPEAN PATENT APPLICATION NO.**

EP 09 17 1288

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2010

| Patent document cited in search report | Publication date | Patent family member(s) | | Publication date |
|---|---|---|---|---|
| US 2007279372 A1 | 06-12-2007 | EP | 2059919 A2 | 20-05-2009 |
| | | US | 2009278867 A1 | 12-11-2009 |
| | | WO | 2007143463 A2 | 13-12-2007 |

For more details about this annex : see Official Journal of the European Patent Office, No. 12/82